Europäisches Patentamt

European Patent Office

Office européen des brevets

(11) Veröffentlichungsnummer: **0 288 015**
**A2**

(12) **EUROPÄISCHE PATENTANMELDUNG**

(21) Anmeldenummer: **88106237.6**

(22) Anmeldetag: **19.04.88**

(51) Int. Cl.⁴: **H02M 3/156**

(30) Priorität: **21.04.87 DE 3713377**

(43) Veröffentlichungstag der Anmeldung:
**26.10.88 Patentblatt 88/43**

(84) Benannte Vertragsstaaten:
**DE FR GB IT SE**

(71) Anmelder: **SGS-THOMSON MICROELECTRONICS GMBH**
**Haidling 17**
**D-8000 Grafing bei München(DE)**

(72) Erfinder: **Hrassky, Petr, Dr.**
**Brunhuberstrasse 43**
**D-8090 Wasserburg(DE)**

(74) Vertreter: **Klunker . Schmitt-Nilson . Hirsch**
**Winzererstrasse 106**
**D-8000 München 40(DE)**

(54) **Geschalteter Stromregler.**

(57) Geschalteter Stromregler für eine induktive Last (L, $R_L$), mit einer zwischen die beiden Pole ($V_C$, $V_E$) einer Versorgungsspannungsquelle (B) geschalteten Reihenschaltung mit der induktiven Last (L, $R_L$), einem Stromsensor ($R_S$),
und einem steuerbaren Schalter (S), dessen Schaltzustand von dem Ausgangssignal eines Komparators (K) beeinflußt wird, der das Sensorsignal mit einem den Stromsollwert bestimmenden Referenzsignal einer Referenzsignalquelle (Q, $R_R$) vergleicht und das Umschalten des Schalters (S) jeweils dann bewirkt, wenn das Sensorsignal den Referenzsignalwert erreicht, und mit einem Freilaufkreis mit einer der induktiven Last (L, $R_L$) parallel geschalteten Freilaufeinrichtung (FL). Dabei ist der Stromsensor ($R_S$) auch im Freilaufkreis angeordnet, und die Referenzsignalquelle (Q, $R_R$) steuerbar und in Abhängigkeit von dem Ausgangssignal des Komparators (K) umschaltbar zwischen einem hohen Referenzsignalwert, bei dessen Erreichen durch das Sensorsignal der Komparator ein Unterbrechen des zuvor leitenden Schalters (S) bewirkt, und einem niederen Referenzsignalwert, bei dessen Erreichen durch das Sensorsignal der Komparator (K) ein Leitendschalten des zuvor unterbrochenen Schalters (S) bewirkt. Die von der Freilaufeinrichtung (FL) erzeugte Freilaufspannung ist umschaltbar zwischen einem niedrigen und einem hohen Wert.

FIG. 5

## Geschalteter Stromregler

Die Erfindung betrifft einen geschalteten Stromregler für eine induktive Last, mit einer zwischen die beiden Pole einer Versorgungsspannunsquelle geschalteten Reihenschaltung mit der induktiven Last, einem Stromsensor, dessen Sensorsignal ein Maß für denn durch die Induktivität fließenden Strom ist, und einem steuerbaren Schalter, dessen Schaltzustand von dem Ausgangssignal eines Komparators beeinflußt wird, der das Sensorsignal mit einem den Stromsollwert bestimmenden Referenzsignal einer Referenzsignalquelle vergleicht und das Umschalten des Schalters jeweils dann bewirkt, wenn das Sensorsignal das Referenzsignal erreicht, mit einem Freilaufkreis, der eine der induktiven Last parallel geschaltete Freilaufeinrichtung aufweist, die eine vorbestimmte Freilaufspannung bildet, und mit einer Spannungsbegrenzungseinrichtung, die in der Freilaufphase einen raschen Abfall des Freilaufstroms der induktiven Last ermöglicht.

Für viele Anwendungen ist es notwendig, einen konstanten Strom in einer induktiven Last zu regeln. Als typisches Beispiel hierfür können Treiber für Magnetventile und induktive Stellglieder genannt werden. Diese Stromregelung wird im Strombereich bis 6 A und im Spannungsbereich bis 60 V in zunehmendem Maße mit monolithisch integrierten Leistungstreibern realisiert. Als wichtige Parameter des Stromreglers müssen die Stromregelgenauigkeit, die Stromanstieg-und Stromabfall-Steilheit und die Treiberverlustleistung betrachtet werden.

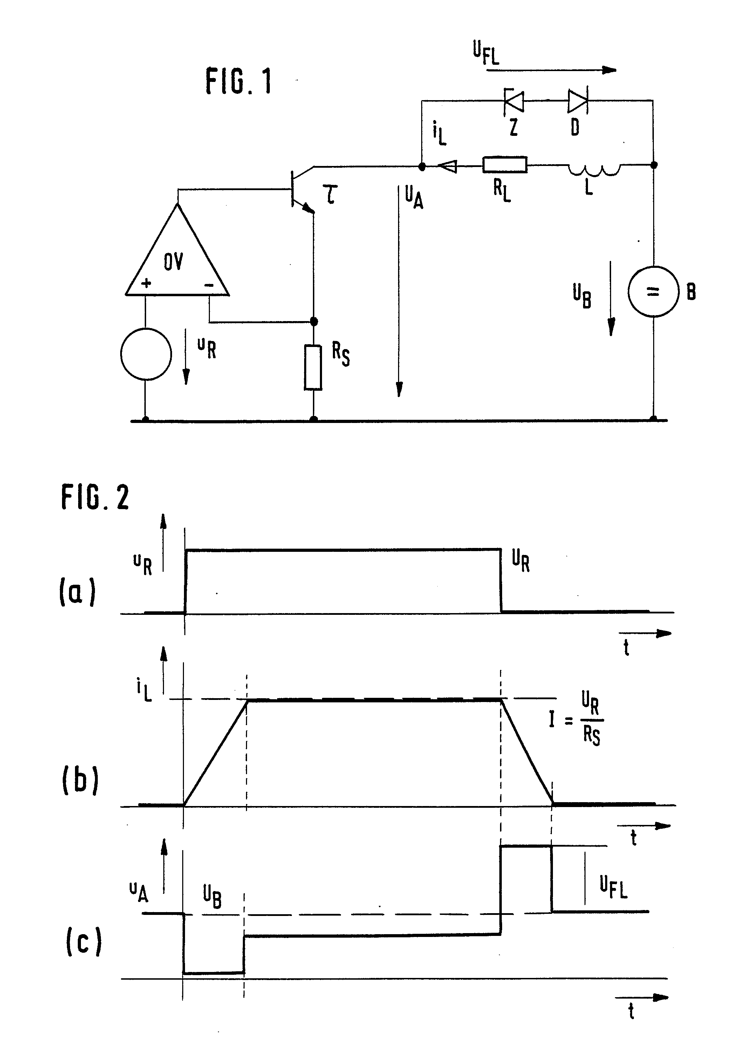

Das bekannte Prinzip eines linearen Stromreglers für induktive Last ist in Fig. 1 dargestellt. Eine induktive Last mit der Induktivität L und einem ohmschen Widerstand $R_L$ ist an den Kollektor eines Treibertransistors T angeschlossen, in dessen Emitterzweig sich ein Sensorwiderstand $R_S$ befindet, über dem eine dem Laststrom $i_L$ proportionale Sensorspannung entsteht. Diese wird mittels eines Operationsverstärkers OV mit einer Referenzspannung $u_R$ verglichen. Das Ausgangssignal des Operationsverstärkers OV steuert den Treibertransistor T. Mit Hilfe der Referenzspannung $u_R$ kann man den Soll-Laststrom vorgeben. Parallel zur induktiven Last L, $R_L$ ist eine Freilaufschaltung in Form einer Diode D und einer dazu in Reihe geschalteten Zenerdiode Z geschaltet. Zwischen das nicht mit dem Treibertransistor T verbundene Ende der induktiven Last L, $R_L$ und Masse ist eine Versorgungsspannungsquelle B geschaltet.

Die Funktionsweise dieses linearen Stromreglers ist in Fig. 2 gezeigt. Fig. 2a zeigt eine Stromfunktion für die Referenzspannung $u_R$, mittels welcher der Stromregler für eine bestimmte Zeit eingeschaltet wird. Fig. 2b zeigt den Verlauf des Laststroms $i_L$ während der Einschaltphase, der Regelphase und der Ausschaltphase. Fig. 2c zeigt den Verlauf der zwischen dem Kollektor des Treibertransistors T und Masse auftretenden Ausgangsspannung $u_A$.

Wird die Referenzspannung $u_R$ gemäß Fig. 2a eingeschaltet, steigt der durch die Induktivität fließende Laststrom $i_L$ in bekannter Weise gemäß Fig. 2b nur allmählich an. Daher steigt auch die Sensorspannung über dem Sensorwiderstand $R_S$ nur allmählich an, so daß der Treibertransistor T während der Stromanstiegsphase übersteuert wird und in die Sättigung gelangt. Zum Einschaltzeitpunkt fällt daher die Ausgangsspannung $u_A$ vom Spannungswert $U_B$ der Versorgungsspannungsquelle B auf die sehr niedrige Kollektor-Emitter-Sättigungsspannung ab. Erreicht die mit dem Laststrom $i_L$ ansteigende Sensorspannung den Wert der Referenzspannung $u_R$, gelangt der Treibertransistor T in den aktiven Regelbereich, in dem der Laststrom $i_L$ auf den konstanten Wert $I = U_R/R_S$ geregelt wird. Der Treibertransistor T gelangt auf eine Kollektor-Emitter-Spannung, die um den Wert der Spannungsabfälle über $R_L$ und $R_S$ niedriger als $U_B$, jedoch wesentlich höher als die Kollektor-Emitter-Sättigungsspannung ist.

Das Abschalten der Referenzspannung $u_R$ führt zum Sperren des Treibertransistors T und somit zu einer Unterbrechung des bisherigen Laststromkreises. Dabei wechselt die Spannung über der Induktivität ihre Polarität. In dieser Situation verhält sich die Induktivität wie eine Stromquelle; dabei steigt deren Spannung solange an, bis der Strom über die Freilaufschaltung abfließen kann. Die Freilaufspannung $U_{FL}$ wird durch die Summe aus der Diodenspannung der Diode D und der Zenerspannung der Zenerdiode Z gebildet. Die Ausgangsspannung $u_A$ des Stromreglers steigt dabei auf die Summenspannung $U_B + U_{FL}$ an.

Die Stromanstiegs-Steilheit und die Stromabfall-Steilheit sind direkt proportional zur je wirksamen Spannung. Um einen schnellen Stromanstieg zu erreichen, muß daher für eine große Versorgungsspannung $U_B$, eine kleine Kollektor-Emitter-Sättigungsspannung $U_{CES}$ des Treibertransistors T und einen kleinen Widerstand $R_L$ gesorgt werden.

Eine hohe Versorgungsspannung $U_B$ führt jedoch während der Stromregelphase zu einer entsprechend hohen Verlustleistung an dem als Regelelement dienenden Treibertransistor T, die gleich dem Produkt aus dem in Fig. 2b gezeigten Konstantstromwert und dem in Fig. 2c gezeigten Spannungswert während der Regelphase ist, nämlich

$$P_d = i_L \, U_B - (R_L + R_S) \, i_L^2 \qquad (1)$$
ist.

Um einen schnellen Stromabfall zu erreichen, muß man für eine große Freilaufspannung sorgen, was durch Verwendung der Zenerdiode Z erreicht wird. Dabei entsteht über dem Treibertransistor T wähend der Freilaufphase eine Spannung von

$$U_{AFL} = U_B + U_{FL}. \qquad (2)$$

Die Forderung nach einem schnellen Stromanstieg bedeutet somit eine hohe Verlustleistung während der Regelphase und ein schneller Stromabfall kann nur bei hoher Sperrspannung des Treibertransistors T erreicht werden, der somit sowohl eine hohe Verlustleistung als auch eine hohe Sperrspannung vertragen können muß.

Die hohen Verlustleistungen linearer Stromregler sind in der Praxis oft nicht akzeptabel. Die Verlustleistung während der Stromregelphase kann durch Verwendung eines geschalteten Stromreglers gesenkt werden. Dessen Grundprinzip liegt darin, daß nach Erreichen des gewünschten Laststrompegels durch einen möglichst langsamen Stromabfall und wiederholtes Einschalten des Regelelementes der mittlere Wert des Laststroms konstant gehalten wird. Der als Regelelement dienende Schalttransistor, der nicht dauernd eingeschaltet ist und nur in der Sättigung arbeitet, hat dann eine viel kleinere mittlere Verlustleistung.

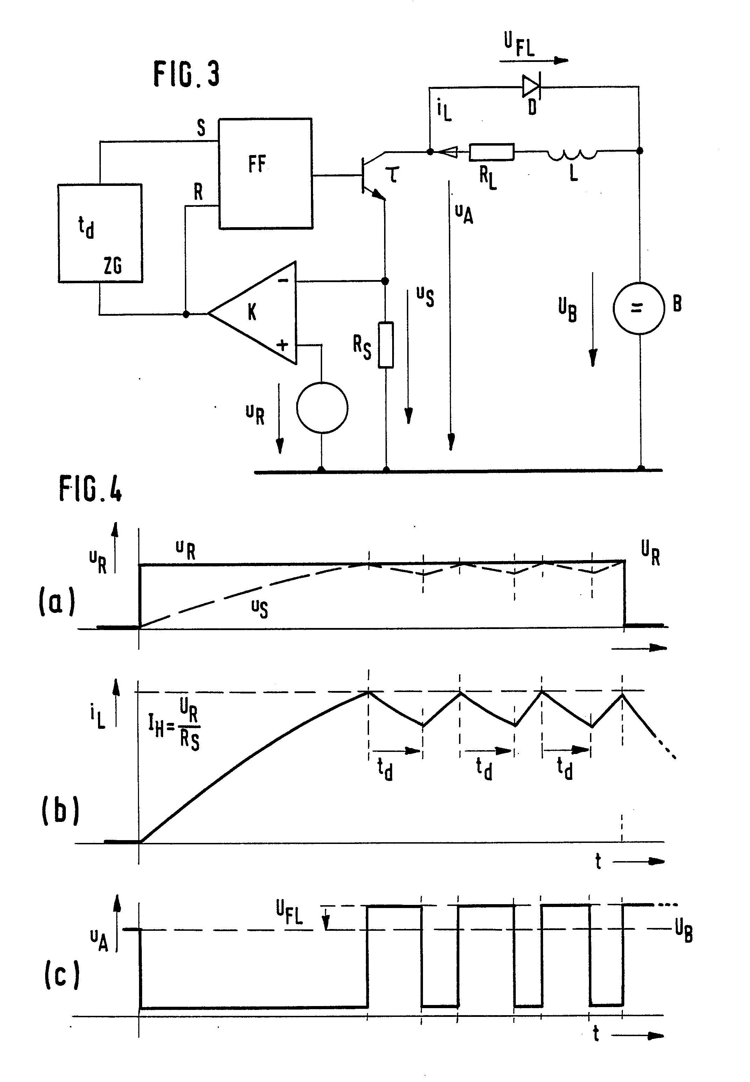

Das Prinzipschaltbild eines geschalteten Stromreglers bekannter Art ist in Fig. 3 gezeigt. Zugehörige Spannungs-und Stromverläufe sind in den Fig. 4a,4b und 4c gezeigt. Dabei werden entsprechende Komponenten und Größen mit gleichen Bezugszeichen wie in den Fig. 1 und 2 bezeichnet.

Im Unterschied zu dem linearen Stromregler nach Fig. 1 weist der geschaltete Stromregler nach Fig. 3 einen Komparator K auf, dessen Ausgang mit dem Setzeingang S eines Flipflop FF über ein Zeitglied ZG und mit dem Rücksetzeingang R des Flipflop direkt verbunden ist. Der Ausgang des Flipflop FF steuert die Basis des als gesteuerter Schalter fungierenden Treibertransistors T. Die Freilaufspannung $U_{FL}$ wird hier nur durch eine einzige Diode D gebildet.

Dieser Stromregler arbeitet mit Pegel-Zeit-Steuerung. Der Strom-Sollwert wird mit der Referenzspannung $u_R$ vorgegeben. In der mit dem Einschalten von $u_R$ beginnenden Schaltphase steigen der Laststrom $i_L$ und damit auch die Sensorspannung $U_S$ allmählich an. Nach Erreichen des Stromwertes

$$I_H = U_R / R_S \qquad (3)$$

wird das bis dahin gesetzte Flipflop FF zurückgesetzt und der bis dahin leitende Transistor T für eine durch das Zeitglied vorgegebene Zeitdauer $t_d$ abgeschaltet. Während dieser Freilaufzeit fließt der Laststrom $i_L$ durch die Freilaufdiode. Aufgrund der niedrigen Flußspannung dieser Diode ergibt sich eine niedrige Freilaufspannung und der Laststrom in der Freilaufphase fällt entsprechend langsam ab. Nach Ablauf der Zeitdauer $t_d$ wird der Schalttransistor T wieder eingeschaltet und der Laststrom $i_L$ steigt wieder an bis $I_H$. Während der Einschaltphasen tritt an dem Schalttransistor T lediglich die Kollektor-Emitter-Sättigungsspannung $U_{CES}$ auf, so daß die im Schalttransistor T auftretende Verlustleistung gering ist.

Bei diesem Stromregler kann es durch Änderungen verschiedener Parameter, wie der Zeitkonstanten des Zeitgliedes ZG, der Diodenspannung der Freilaufdiode D, Laständerungen (Variationen von $R_L$ und/oder L) oder dergleichen zu Veränderungen des Strompegels am Ende der jeweiligen Freilaufphase kommen, was zu einer Variation des Mittelwertes des Laststroms führt. Auch ist eine direkt geregelte Umschaltung des Laststroms auf einen niedrigeren Wert bei diesem Regelprinzip nicht möglich.

Aus der GB-PS 1 486 012 ist eine Steuerschaltung für einen elektrischen Antriebsmotor bekannt. Die Wicklung des Motors bildet eine Reihenschaltung mit einem Sensor. Dieser Reihenschaltung ist eine Freilaufdiode parallel geschaltet. Mit Hilfe eines Schalttransistors wird der durch den Motor fließende Strom zwischen einem hohen Wert und einem niedrigen Wert hin-und hergeschaltet. Hierzu dient ein Schmitt-Trigger, der durch einen hysteresebehafteten Komparator gebildet ist. Der Komparator vergleicht die Ausgangsspannung mit einer Referenzspannung, die von einem Potentiometer abgegriffen wird. Die Stellung des Potentiometers bestimmt den Geschwindigkeitssollwert des Motors und daher die Größe der hohen Stromgrenze. Dieser bekannte Stromregler benötigt neben den Leitungen zur Verbindung mit der Versorgungsspannung und Masse mindestens zwei weitere Verbindungsleitungen zwischen Stromregler und Last oder Last und Sensor. Bei monolithischer Integration dieses bekannten Stromreglers ergeben sich Schwierigkeiten, wenn der Sensor durch einen externen Widerstand gebildet wird, da dann die Gefahr von Störspannungen und ein Bezugspotntialversatz auftreten.

Aus der DE-OS 29 50 190 ist ein Spannngsregler bekannt, der einen Langsreglertransistor aufweist, der von dem Ausgang eines Differenzverstärkers gesteuert wird. Auf den einen Eingang des Differenzverstärkers ist die Ausgangsspannung zurückgekoppelt. Der andere Eingang des Differenzverstärkers ist einerseits mit einer Referenzspannungsquelle und andererseits mit der Ausgangsseite des Längsreglungstransistors verbunden.

Dabei handelt es sich um einen geschalteten Spannungsregler, so daß dem Referenzspannungseingang des Differenzverstärkers eine Referenzspannung zugeführt wird, die sich mit dem jeweiligen Schaltzustand des geschalteten Spannungsreglers ändert.

Die DE-OS 29 50 692 zeigt einen geschalteten Stromregler der eingangs angegebenen Art. Dieser bekannte Stromregler weist zwei Sensorwiderstände auf. Einer befindet sich in einer Reihenschaltung mit der induktiven Last und dem diese Last schaltenden Schalttransistor. Der andere Stromsensor befindet sich in Reihenschaltung mit einer geschalteten Freilaufdiode, wobei diese Reihenschaltung der induktiven Last parallel geschaltet ist. Die beiden Sensorwiderstände werden über eine Summierschaltung auf den einen Eingang eines Komparators geführt, dessen anderer Eingang an ein Referenznetzwerk angeschlossen ist. Der Ausgang des Komparators steuert das Schalten des Schalttransistors. Die Reihenschaltung aus dem Schalttransistor und dem dazu in Reihe geschalteten Stromsensor ist durch eine Zenerdiode überbrückt. Wenn am Ende des Stromreglereinschaltimpulses der Schalttransistor gesperrt wird, steigt die Spannung am Kollektor dieses Transistors soweit an, bis der Freilaufstrom der induktiven Last über die Zenerdiode schnell abgebaut werden kann.

Dieser bekannte Stromregler erfordert beträchtlichen Schaltungsaufwand und führt bei monolithischer Integration zu Problemen. Insbesondere ergeben sich bei monolithischer Integration der beiden Sensorwiderstände Probleme mit deren Gleichverhalten, beispielsweise aufgrund thermischer Ungleichheiten an verschiedenen Stellen des Chips der monolithisch integrierten Schaltung. Man benötigt entweder zwei Komparatoren oder eine komplizierte, aufwendige Schaltung, um die Signale der beiden Sensorwiderstände einem Komparator oder Schwellenwertschalter zuzuführen. Die erreichbare Stromregelgenauigkeit, die man mit einer so konzipierten inte grierten Schaltung erreichen kann, ist vielfach nicht ausreichend. Außerdem geschieht der rasche Abbau des Freilaufstroms über die Zenerdiode unkontrolliert und ungeregelt. Dieses bekannte Konzept ist daher nicht für Stromregler geeignet, die zwischen verschiedenen geregelten Strommittelwerten umschaltbar sind. Insbesondere bei Magnetventilen, beispielsweise zur Benzineinspritzung bei Motoren ist es erwünscht, zum raschen Einschalten des Magnetventils zunächst einen relativ hohen geregelten Strommittelwert zur Verfügung zu stellen und nach dem Einschaltvorgang des Ventils auf einen niedrigeren geregelten Strommittelwert oder Magnethaltewert herabzugehen. Dieser Übergang von hohem zu niedrigem geregelten Stromwert sollte schnell und ebenfalls geregelt vor sich gehen.

Der Erfindung liegt die Aufgabe zugrunde, bei einem Stromregler der eingangs angegebenen Art mit möglichst geringem Schaltungsaufwand die Genauigkeit der Stromregelung zu verbessern und dabei eine schnelle geregelte Umschaltung zwischen mehreren Strommittelwerten zu ermöglichen. Weiterhin soll eine hohe Stromschaltdynamik erreicht werden und der Stromsensor soll innerhalb des Stromreglers liegen, damit man für den Lastanschuß mit nur einer Zuleitung neben den Anschlüssen für die Versorgungsspannung und Masse auskommt.

Eine Lösung dieser Aufgabe besteht darin, daß der Stromsensor auch Bestandteil des Freilaufkreises ist, und daß mehrere geregelte Strommittelwerte auswählbar oder analog steuerbar sind. Die Referenzsignalquelle ist steuerbar mittels eines Sollwertsteuersignals und bezüglich des Referenzsignalbezugswertes zwischen einem darüber liegenden höheren Referenzsignalwert oder einem darunterliegenden niedrigeren Referenzsignalwert umschaltbar, und zwar in Abhängigkeit von dem Ausgangssignal des Komparators, wobei der Komparator dann, wenn das Sensorsignal den höheren Referenzsignalwert erreicht, ein Unterbrechen des zuvor leitenden Schalters bewirkt, und dann, wenn da Sensorsignal den niedrigeren Referenzsignalwert erreicht, ein Leitendschalten des zuvor unterbrochenen Schalters bewirkt. Die Spannungsbegrenzungseinrichtung ist in Reihenschaltung in den Freilaufkreis geschaltet und ist mittels eines steuerbaren Überbrückungsschalters überbrückt während der Strommittelwert auf einen konstanten Wert geregelt wird.

Vorteilhafte Weiterbildungen der Erfindung ergeben sich aus den Unteransprüchen.

Dadurch, daß erfindungsgemäß der Stromsensor in Reihe zum Ausgang und in Reihe zum steuerbaren Schalter angeordnet ist und auch im Freilaufkreis liegt, wird der Strom sowohl in der Einschaltphase als auch während der Freilaufphasen erfaßt, und dadurch, daß auch der Referenzwiderstand erfindungsgemäß am Ausgang angeschlossen ist, kann der Ausgangsstrom mittels eines Komparators erfaßt werden, der die Differenz der Spannnungsabfälle an diesen beiden Widerständen mißt. Um diesen Spannungsvergleich in den beiden Stromphasen durchführen zu können, muß der Komparator einen Gleichtaktspannungsbereich aufweisen, der den ganzen Bereich der Ausgangsspannungen von der kleinsten Sättigungsspannung des Schalterelements bis zu der Summe der Versorgungsspannung $U_B$ und der Freilaufspannung $U_{FL}$ abdeckt. Und dadurch, daß man außerdem die Referenzstromquelle in Abhängigkeit vom Komparatorausgangssignal umschaltbar macht, erreicht man einen geschalteten Zweipegelregler, bei dem unabhängig davon, was zwischen zwei Schaltzeitpunkten passiert, die Schaltzeitpunkte vom Erreichen des oberen bzw. unteren Strompegels abhängig gemacht sind. Dadurch, daß der Laststrom in beiden Phasen der geschalteten Stromregelung erfaßt und zwischen zwei definierten Strompegeln gehalten wird, vermeidet man Variationen des Mittelwertes des Laststroms und kommt somit zu einer hohen Genauigkeit der Stromregelung. Weiterhin wird die Genauigkeit verbessert durch Verwendung nur eines Sensorwiderstandes, nur eines Referenzwiderstandes und nur eines Komparators. Somit treten keine Fehler durch eine Offset-Spannungsdifferenz und durch Fehlanpassung auf.

Bei einer besonders bevorzugten Ausführungsform der Erfindung wird im Freilaufkreis eine Reihenschaltung aus einer Diode und einer Zenerdiode verwendet, ist die Zenerdiode jedoch mit Hilfe eines Überbrückungsschalters überbrückbar. Während der geschalteten Stromregelung, wenn sich sich der Ausgangsstrommittelwert nicht ändert, wird die Zenerdiode durch Schließen des Überbrückungsschalters kurzgeschlossen , so daß eine relativ niedrige Freilaufspannung und damit während der Stromregelung langsame Stromabfälle zwischen dem hohen und dem niedrigen Strompegel entstehen. Zum Zeitpunkt des Abschaltens des Stromreglers oder Umschaltens des Stromreglers zu einem niedrigen Strommittelwert wird der Überbruckungsschalter geöffnet, so daß die Zenerdiode an der Bildung der Freilaufspannung beteiligt wird. Die daraus resultierende hohe Freilaufspannung führt zu einem raschen Abfall des Laststroms des Stromreglers.

Dadurch, daß der Laststrom sowohl während der langsamen als auch während der schnellen Freilaufphase mit dem gleichen Komparator K erfaßt und der Stromsollwert der Stromquelle Q nachgeregelt wird, ist eine direkte geregelte - schnelle Ummschaltung von einem höheren Strommittelwert $I_1$ zu einem niedrigeren Strommittelwert $I_2$ möglich.

Die Freilaufeinrichtung kann in bevorzugter Weise durch ein komplexeres Schaltungsnetzwerk gebildet werden, das eine hohe Sperrspannung und eine zwischen zwei verschiedenen Werten umschaltbare Flußspannung aufweist.

An dem Komparator des erfindungsgemäßen Stromreglers treten insbesondere während der Abschalt-Freilaufphase Eingangsgleichtaktspannungen auf, die weit über dem Spannungswert der Versorgunsspannungsquelle liegen. Herkömmliche Komparatoren weisen einen derart weiten Eingangsgleichtaktspannungsbereich nicht auf. Eine bevorzugte Ausführungsform der Erfindung weist daher einen Komparator gemäß Anspruch 16 auf.

Die Erfindung wird nun anhand von Ausführungsformen näher erläutert. In den Zeichnungen zeigen:

Fig. 1 das Prinzip-Schaltbild eines linearen Stromreglers bekannter Art:

Figuren 2a bis 2c zu dem linearen Stromregler nach Fig. 1 gehörende Spannungs-und Stromverläufe;

Fig. 3 einen geschalteten Stromregler bekannter Art;

Figuren 4a bis 4c zu dem geschalteten Stromregler nach Fig. 3 gehörende Spannungs-und Stromverläufe;

Fig. 5 eine erste Ausführungsform eines geschalteten Stromreglers erfindungsgemäßer Art;

Figuren 6a bis 6f zu dem erfindungsgemäßen Stromregler gehörende Spannungs-und Stromverläufe;

Fig. 7 eine zweite Ausführungsform eines erfindungsgemäßen Stromreglers mit einem besonders geeigneten Komparator mit weit über die Versorgungsspannung hinausgehenden Eingangsgleichtaktspannungsbereich;

Fig. 8 eine Ausführungsform des erfindungsgemäßen Stromreglers mit einer Kompensation der durch den Eingangsstrom des Komparators am Referenzwiderstand erzeugten Fehlerspannung;

Fig. 9 eine Ausführungsform des erfindungsgemäßen Stromreglers mit einer Zusatzschaltung, die die richtige Phasenlage des Komparators in der Stromanlaufphase vom Nullwert an gewährleistet; und

Fig. 10 eine Ausführungsform der Stromquelle, die eine Stromsollwertvorgabe mittels eines externen Stromprogrammierwiderstandes $R_1$ ermöglicht.

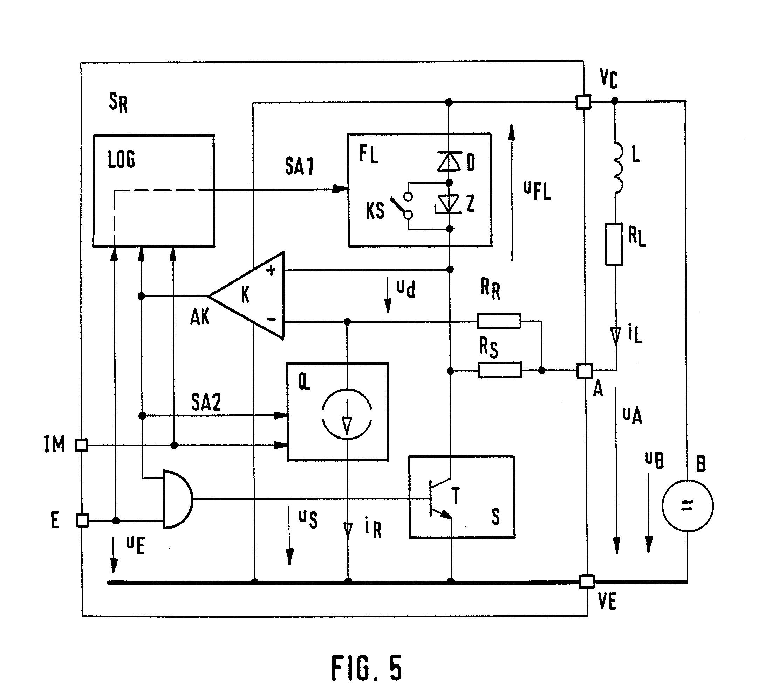

Bei dem in Fig. 5 gezeigten erfindungsgemäßen Stromregler werden für einzelne Komponenten und Größen, soweit sie mit denen der Figuren 1 und/oder 3 übereinstimmen, gleiche Bezugszeichen verwendet.

Die in Fig. 5 gezeigte erste Ausführungsform eines erfindungsgemäßen geschalteten Stromreglers SR ist als monolithisch integrierte Schaltung ausgebildet. Die inteintegrierte Schaltung weist fünf Anschlußstellen auf, nämlich einen Eingangsanschluß E, einen Ausgangsanschluß A, einen Versorgungsspannungsanschluß $V_C$, einen Masseanschluß $V_E$ und einen Strommittelwertsteuereingang IM.

Eine zwischen $V_C$ und $V_E$ geschaltete Versorgungsspannungsquelle B liefert eine Versorgungspannung $U_B$. Zwischen $V_C$ und A ist eine induktive Last mit einer Induktivität L und einem Widerstand $R_L$ geschaltet.

Zwischen $V_C$ und $V_E$ ist die Reihenschaltung einer Freilaufeinrichtung FL und eines steuerbaren Schalters S geschaltet, wobei FL an $V_C$ und S an $V_E$ angeschlossen ist. Die Freilaufeinrichtung FL ist durch eine Serienschaltung aus einer Diode D und einer Zenerdiode Z gebildet. Parlallel zur Zenerdiode Z ist ein Überbrückungsschalter KS geschaltet, mit welchem die Zenerdiode Z überbrückt werden kann. Die Steuerung des Überbrückungsschalters KS geschieht mit Hilfe eines Schaltsteuersignals, das einem Steuereingang SA1 der Freilaufeinrichtung FL zugeführt wird. Der Schalter S ist bei der dargestellten Ausführungsform durch einen npn-Transistor T gebildet.

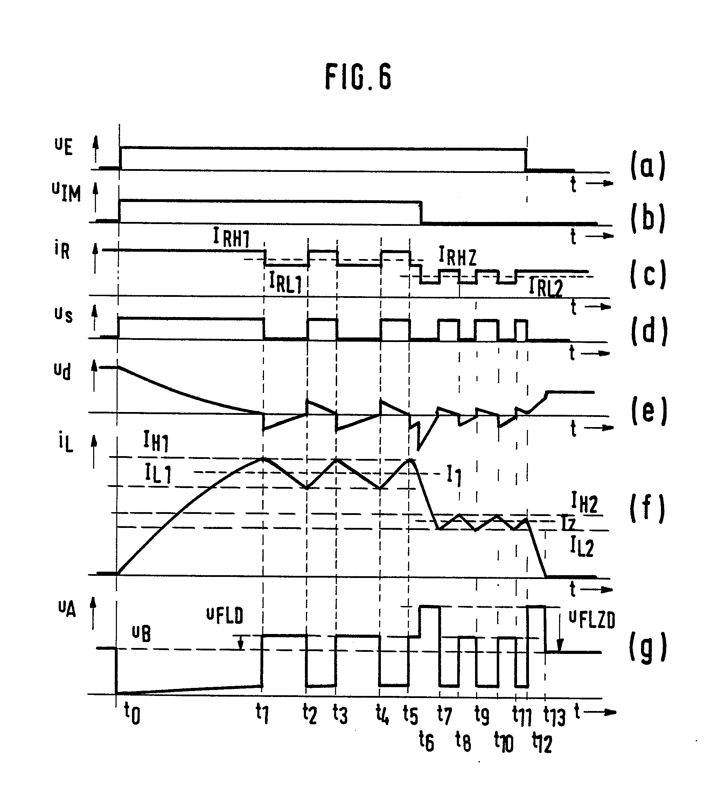

Der Verbindungspunkt zwischen FL und T ist einerseits über einen Sensorwiderstand $R_S$ an den Ausgangsanschluß A und andererseits an den nicht-invertierenden Eingang eines Komparators K angeschlossen. Der invertierende Eingang des Komparators K ist einerseits über einen Referenzwiderstand $R_R$ an den Ausgangsanschluß A und andererseits über eine steuerbare Stromquelle Q an den Masseanschluß $V_E$ angeschlossen. Die steuerbare Stromquelle Q ist über einen Steueranschluß SA2 zwischen einem hohen Stromwert $I_{RH1}$ bzw. $I_{RH2}$ und einem niedrigen Stromwert $I_{RL1}$ bzw. $I_{RL2}$ umschaltbar (Fig. 6c). Der Steueranschluß SA2 der Stromquelle Q ist mit dem Ausgang des Komparators K verbunden. Mittels des Signals am Steuereingang IM kann der Mittelwert des Ausgangsstroms umgeschaltet werden.

Die Basis des Transistors T ist an den Ausgang eines UND-Gliedes U angeschlossen, das mit einem Eigang an den Ausgang des Komparators K und mit einem zweiten Eingang an den Eingangsanschluß E angeschlossen ist.

Das Steuersignal SA1 des Überbruckungsschalters KS der Freilaufeinrichtung FL wird mittels einer Logikschaltung LOG als Kombination des Eingangssteuersignals E, des Komparatorausgangssignals AK und des Strommittelwertsteuersignals IM gebildet. Diese logische Funktion gewährleistet durch die Aktivierung der Zenerdiode Z den - schnellen Stromabfall von einem hohen Strommittelwert zu einem niedrigeren Strommittelwert (Fig. 6f). Wenn diese Funktion nicht benötigt wird, kann die Logikschaltung wegfallen und der Steuereingang SA1 mit dem Eingangssteueranschluß E verbunden werden. Damit wird erreicht, daß der Ausgangsstrom nach dem Abschalten schnell abfällt.

Unter Zuhilfenahme der Fig. 6a bis 6g wird nun die Funktionsweise des in Fig. 5 gezeigten Stromreglers erläutert.

Mit Hilfe des Sensorwiderstandes $R_S$ wird eine Sensorspannung erzeugt, die dem durch die induktive Last L, $R_L$ fließenden Strom $i_L$ proportional ist. Mit Hilfe der Stromquelle Q wird über dem Referenzwiderstand $R_R$ eine Referenzspannung erzeugt. Diese nimmt je nach dem Schaltzustand der Stromquelle Q einen dem höheren Stromwert $I_{RH1}$ bzw. $I_{RH2}$ oder einen dem niedrigeren Stromwert $I_{RL1}$ bzw. $I_{RL2}$ entsprechenden Referenzspannungswert ein. Die Differenzspannung $u_d$ zwischen den Spannungsabfällen an den Widerständen $R_R$ und $R_S$ wird vom Komparator K ausgewertet und bestimmt die Schaltzustände der Stromquelle Q und des Transistors T.

Der Stromregler wird zum Zeitpunkt $t_0$ durch die Einschaltsteuerspannung $u_E$ (Fig. 6a) eingeschaltet. Zu diesem Zeitpunkt befindet sich die Stromquelle Q in dem Schaltzustand, in welchem sie den hohen Strom $I_{RH1}$ (Fig. 6c) abgibt. Da der Laststrom $i_L$ und damit die über $R_S$ entstehende Sensorspannung noch Null sind, weist die Differenzspannung $u_d$ am Eingang des Komparators K den in Fig. 6e dargestellten Maximalwert auf. Der Komparator K gibt daher ein hohes Ausgangssignal ab, das am Ausgang des freigegebenen UND-Gliedes U ein Transistoreinschaltsignal $u_S$ hohen Pegels (Fig. 6d) bewirkt und den Transistor T leitend schaltet. Dies bewirkt ein Ansteigen des Laststroms $i_L$ und ein entsprechendes Ansteigen der über $R_S$ abfallenden Sensorspannung. Zum Zeitpunkt $t_1$ erreicht die Sensorspannung die Referenzspannung, so daß die Differenzspannung $u_d$ den Nullwert durchläuft (Fig. 6e). Das Ausgangssignal des Komparators K und somit auch die Schaltspannung $u_S$ gehen daher auf niedrigeren Wert, so daß die Stromquelle Q auf den niedrigeren Stromwert $I_{RL1}$ (Fig. 6c) umgeschaltet wird, was eine sprunghafte Änderung der Differenzspannung $u_d$ erzeugt, und der Transistor T abschaltet.

Da T gesperrt ist, fließt der daraufhin abnehmende Laststrom $i_L$ über die Freilaufeinrichtung FL. Da zum Einschaltzeitpunkt $t_0$ der Überbrückungsschalter KS geschlossen worden ist, wird in der Freilaufeinrichtung FL nur die Diode D wirksam, was zu einer entsprechend niedrigen Freilaufspannung $U_{FLD}$ (Fig 6g) führt. Der Laststrom $I_L$, der zum Zeitpunkt $t_1$ den hohen Wert $I_{H1}$ erreicht hatte, fällt entsprechend langsam ab, bis er im Zeitpunkt $t_2$ den unteren Strompegelwert $I_{L1}$ erreicht hat. Dies ist dann der Fall, wenn die Differenzspannung $u_d$ auf Null angestiegen ist. Zu diesem Zeitpunkt - schaltet das Ausgangssignal des Komparators K wieder um, was einerseits zum erneuten Umschalten der Stromquelle Q auf den hohen Stromwert $I_{RH1}$ und andererseits zum erneuten Einschalten des Transistors T führt.

Auf diese Weise wird eine laufende Laststromänderung zwischen den zwei Strompegelwerten $I_{H1}$ und $I_{L1}$ erreicht, so daß der Laststrom $i_L$ mit hoher Genauigkeit auf einen dazwischen liegenden Mittelwert $I_1$ geregelt wird. Die Strompegelwerte $I_{H1}$ und $I_{L1}$ werden durch die beiden Stromwerte $I_{RH1}$ und $I_{RL1}$ vorgegeben.

Das Umschalten der Stromquelle auf einen niedrigeren Stromsollwert zum Zeitpunkt $t_6$, wie in Bild 6e gezeigt, z. B. durch Anlegen eines Low-Pegels an den Eingang IM, bewirkt gleichzeitig das Öffnen des Überbrückungsschalters KS. Dadurch steht der Last die hohe Freilaufspannung $U_{FLZD}$ zur Verfügung und der Ausgangsstrom fällt schnell ab. Erst nach dem Erreichen des Wertes $I_{L2}$ wird der Schalttransistor T wieder eingeschaltet und der Ausgangsstrom wird zwischen den Strompegeln $I_{L2}$ und $I_{H2}$ mittels der oben beschriebenen Funktion geregelt. Die Umschaltung des Ausgangsstrommittelwertes kann auch durch ein analoges Steuersignal an IM erfolgen.

Das Abschalten der Einschaltsignalspannung $u_E$ zum Zeitpunkt $t_{12}$ führt zum Sperren oder Gesperrthalten des Transistors T, so daß die Schaltung in den Freilaufbetrieb übergeht. Durch die Beendigung von $u_E$ zum Zeitpunkt $t_{12}$ wird außerdem der Überbrückungsschalter KS geöffnet, so daß die Freilaufspannung $U_{FL}$ von $t_{12}$ ab durch die Summenspannung der Diode D und der Zenerdiode Z bestimmt wird. Die entsprechend hohe Freilaufspannung führt zu einem raschen Abfall des Laststroms $i_L$ bis auf Null.

Die Vorteile dieses Zweipegelreglers gegenüber dem Pegel-Zeit-Regler gemäß Fig. 3 liegen darin, daß Parameter-und Laständerungen nicht die Genauigkeit der Stromregelung beeinflussen und daß eine direkte geregelte Umschaltung auf einen niedrigeren mittleren Strompegel möglich ist. Diese Umschaltung kann realisiert werden, weil der Laststrom $i_L$ auch während der Freilaufphase mit Hilfe des Sensorwiderstandes $R_S$ erfaßt wird und somit die Information über den aktuellen Strompegel jederzeit verfügbar ist.

Durch die Möglichkeit, die Zenerdiode Z in Abhängigkeit von der Einschaltsteuerspannung $u_E$ zu überbrücken, kann trotz eines langsamen Stromabfalls während der Stromregelung ein schneller Stromabfall nach dem Abschalten des Reglers erreicht werden. Diese Steuerung kann auch so ausgelegt werden, daß ein schneller Stromabfall von einem hohen geregelten Strompegel zu einem niedrigen geregelten Strompegel erreicht wird.

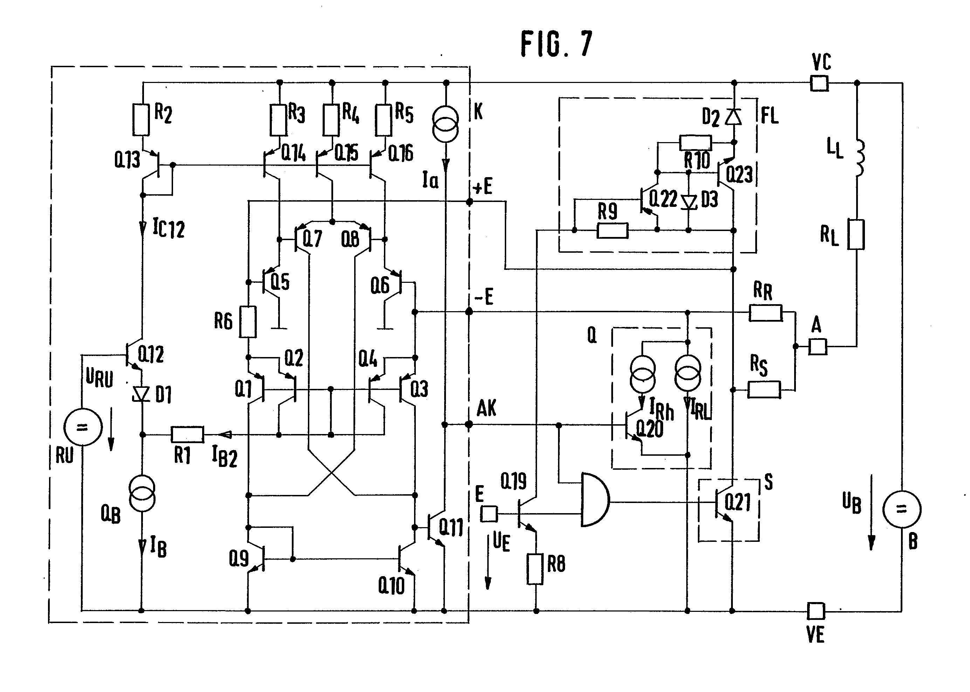

Ein Komparator mit weit über die Versorgungsspannung hinausgehendem Eingangsgleichtaktspannungsbereich wie er für den erfindungsgemäßen Stromregler erforderlich ist, ist in Fig. 7 dargestellt. Dieser Komparator ist in der deutschen Patentanmeldung P 37 13 376.4 der Anmelderin mit dem Titel "Komparator mit erweitertem Eingangsgleichtaktspannungsbereich" im einzelnen erläutert.

Dieser Komparator besitzt zwei parallele Eingangsdifferenzstufen, von denen die erste mit Transistoren Q1 bis Q4 und die zweite mit Transistoren Q5 bis Q8 gebildet ist. Die erste Eingangsdifferenzstufe Q1,Q2 - Q3, Q4 arbeitet in Basisschaltung, während die zweite Eingangsdifferenzstufe Q7, Q8 in Emitterschaltung arbeitet. Der Konstantstrom $I_B$ einer Konstantstromquelle QB kann mit Hilfe der diodengeschalteten Transistoren Q2, Q4, einer Diode D1, einem Transistor Q12 und einer Umschaltreferenzspannungsquelle RU entweder auf den gemeinsamen Basisanschluß der ersten Eingangsdifferenzstufe oder über einen Stromspiegel mit den Transistoren Q13 und Q15 auf den gemeinsamen Emitter der zweiten Eingangsdifferenzstufe geleitet werden. Bei einer Gleichtakteingangsspannung, die kleiner ist als $U_{RU}-U_{BE12}$, wobei $U_{RU}$ der Spannungswert der Umschaltreferenzspannungsquelle RU und $U_{BE12}$ die Basis-Emitter-Durchlaßspannung des Transistors Q12 ist, ist die erste Eingangsdifferenzstufe Q1 bis Q4 gesperrt und arbeitet die zweite Eingangsdifferenzstufe Q5 bis Q8. Ist die Eingangsgleichtaktspannung größer als $U_{RU}-U_{BE12}$, arbeitet die erste Eingangsdifferenzstufe Q1 bis Q4 und ist die zweite Eingangsdifferenzstufe Q5 bis Q8 gesperrt. In einem Übergangsbereich arbeiten beide Eingangsdifferenzstufen.

Die Ausgänge der beiden Eingangsdifferenzstufen sind beide auf dieselbe Stromspiegelschaltung mit den Transistoren Q9, Q10 geschaltet, wobei die Ausgänge der zweiten Eingangsdifferenzstufe Q5 bis Q8 bezüglich der Ausgange der ersten Eingangsdifferenzstufe Q1 bis Q4 überkreuz mit den Stromein-und -ausgängen der Stromspiegelschaltung Q9, Q10 verbunden sind, um dem Umstand Rechnung zu tragen, daß die Eingangsdifferenzstufe in Emitterschaltung eine Phasenumkehr bewirkt, die Eingangsdifferenzstufe in Basisschaltung jedoch nicht. Die Stromspiegelschaltung Q9, Q10 stellt für die Eingangsdifferenzstufen eine aktive Last dar, die eine Differenz der zugeführten Ströme erzeugt. Dieser Differenzstrom steht am Kollektor Q10 zur Verfügung und wird einem Ausgangstransistor Q11 zugeführt.

Da dem Transistorpaar Q7, Q8 je ein Pegelverschiebungs-Emitterfolger Q5 bzw. Q6 vorgeschaltet ist, hat die zweite Eingangsdifferenzstufe Q5 bis Q8 einen Eingangsgleichtaktspannungsbereich, der bis zur Differenz zwischen der Emitter-Basis-Durchlaßspannung und der Kollektor-Emitter-Sättigungsspannung eines Transistors reicht, also in der Praxis etwa 0,4 V unterhalb des Massepotentials liegen kann. Da die erste Eingangsdifferenzstufe Q1 bis Q4 in Basisschaltung arbeitet und daher die Emitter der Transistoren Q1 und Q3 mit den Komparatoreingängen +E bzw. -E verbunden sind, kann diese bei Eingangsgleichtaktspannungen, die weit über der Versorgungsspannung $U_B$ der Versorgungsspannungsquelle B liegen, arbeiten.

Weitere Einzelheiten dieser Komparatorschaltung können der bereits erwähnten Patentanmeldung P 37 13 376.4 entnommen werden, deren Offenbarungsgehalt hiermit zum Bestandteil der vorliegenden Patentanmeldung gemacht wird.

Fig. 7 zeigt außerdem, wie der Komparator mit weiteren Schaltungskomponenten zu einem Stromregler zusammengeschaltet ist. Die Referenzstromquelle Q ist durch eine erste Stromquelle $I_{RL}$ und eine mit einem Transistor Q20 zuschaltbare zweite Stromquelle $I_{Rh}$ gebildet. Durch Zuschalten der zweiten Stromquelle $I_{Rh}$ wird der Strompegel von $I_{RL}$ auf $I_{RH} = I_{RL} + I_{Rh}$ erhöht.

Die Freilaufeinrichtung umfaßt eine Diode D2, eine Zenerdiodennachbildung mit einer Zenerdiode D3, einen Transistor Q23 und einen Widerstand R10. Der Überbrückungsschalter ist durch einen Schalttransistor Q22 mit einem Widerstand R9 gebildet.

Ein Transistor Q19 mit einem Widerstand R8 erzeugt einen eingangssignalabhängigen Strom, der den Überbrückungsschalter steuert.

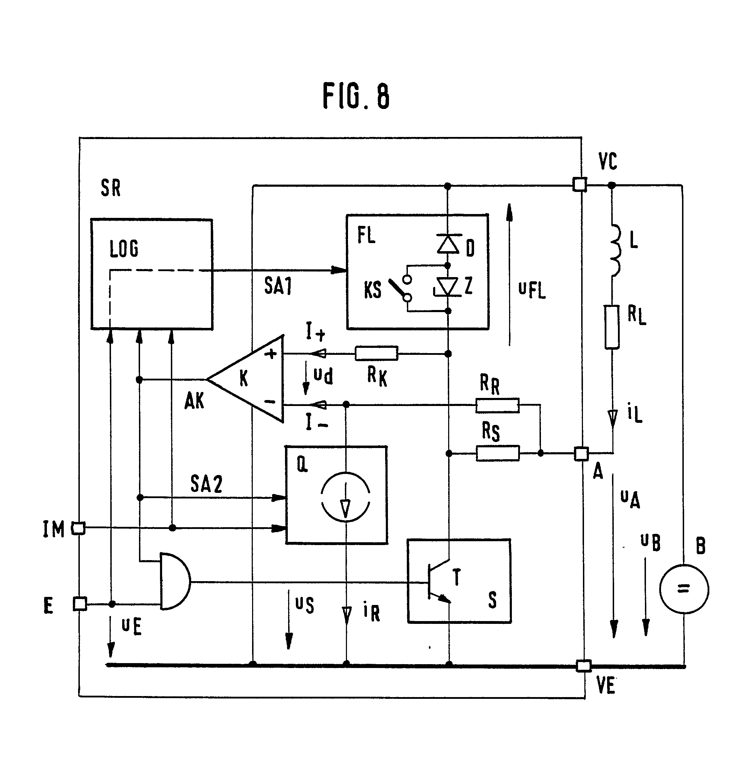

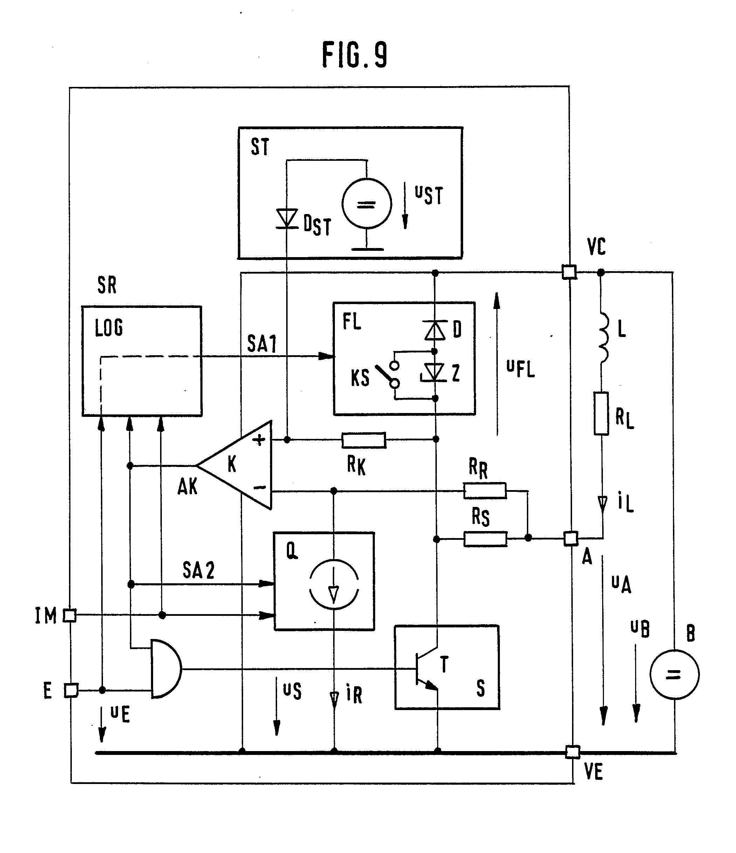

Das Verhältnis des Ausgangsstroms zu dem Stromsollwert ist bestimmt durch das Verhältnis der Widerstände $R_R$ und $R_S$. Dieses Verhältnis liegt typisch in der Größenordnung 10 bis 100. Dadurch, daß die Widerstände an den Komparatoreingängen unterschiedlich sind, ergibt sich, verursacht durch die Eingangsströme des Komparators I+ und I-, eine Fehlerspannung. Diese Fehlerspannung entsteht als Differenz der Spannnungsabfälle an den Eingangswiderständen. Diese Fehlerspannung kann durch Zuschalten eines Kompensationswiderstands $R_K$ in Reihe zu dem nichtinvertierenden Komparatoreingang, wie gezeigt in Fig. 8, kompensiert werden. Die Dimensionierung des Kompensationswiderstands $R_K$ soll unter der Voraussetzung, daß die Eingangsströme I+ und I-gleich sind, so gewählt werden, daß $R_K = R_R - R_S$. Ansonsten stimmt die Ausführungsform nach Fig. 8 mit der in Fig. 5 gezeigten Ausführungs form überein. Der Spannungsbereich, in dem die Stromquelle Q Stromquellenverhalten aufweist, d. h. der Ausgangstrom der Stromquelle spannungsunabhängig ist, ist begrenzt. Bei Unterschreitung einer gewissen kritischen Spannung (z. B. Sättigungsspannung eines Transistors) nimmt der Strom ab. Wenn die kritische Spannung der Stromquelle höher ist als die minimale Sättigungsspannung des Schalttransistors T bei kleinen Ausgangsströmen, kann sich während des Stromanstieges von Null an die Polarität der Komparatoreingangsspannung umdrehen und dadurch wäre das Anlaufen der Stromregelung gestört. Dieses Problem wird eliminiert durch eine Anlaufschaltung ST, wie sie in Fig. 9 gezeigt ist. Dabei ist eine Startspannungsquelle $U_{ST}$ über eine Diode $D_{ST}$ an den nichtinvertierenden Eingangsanschluß des Komparators K angeschlossen, die dafür sorgt, daß unterhalb der kritischen Spannung eine solche störende Polaritätsumkehr nicht auftreten kann. Während des Ausgangsstromanstiegs von Null an wird an den nicht invertierenden Eingang des Komparators eine Startspannng $U_{ST}$-$U_{DST}$ gegeben, die größer ist als die kritische Spannung der Stromquelle Q. Dabei ist $U_{DST}$ der Spannungsabfall über der Diode $D_{ST}$.

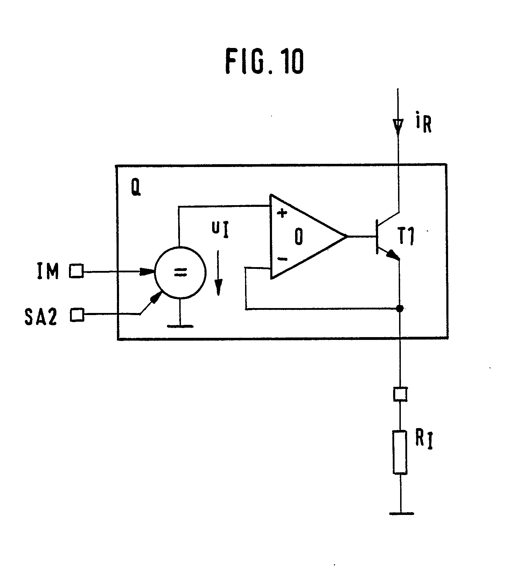

Eine mögliche Ausführungsform der Stromquelle Q ist in Fig. 10 gezeigt. Die Stromquelle ist mit einem Regelkreis realisiert, der an einen externen Stromprogrammierwiderstand $R_I$ die Spannung $U_I$ gibt und den Strom $i_R$ als $U_R = U \cdot R_I$ definiert.

Die Stromquelle Q umfaßt einen Operationsverstärker O, dessen Ausgang an die Basis eines Stromquellentransistors T1 angeschlossen ist, dessen Emitter-Kollektorstrecke den Strom $i_R$ führt. Der invertie rende Eingangsschluß des Operationsverstärkers O ist an den Emitter des Stromquellentransistors T1 angeschlossen. Der nichtinvertierende Eingangsanschluß des Operationsverstärkers O ist über eine umschaltbare Spannungsquelle $U_I$ mit Masse verbunden. Dabei erfolgt die Ausgangsstrommittelwertsteuerung über den Steuereingang IM und das Umschalten zischen den $I_{RL}$ -und $I_{RH}$ - Werten mittels des Steuereingangs SA2. Der Emitter des Stromquellentransistors T1 ist über den externen Stromprogrammierwiderstand $R_I$ mit Masse verbunden. Der Stromprogrammierwiderstand $R_I$ ist zwischen verschiedenen Widestandswerten umschaltbar.

Der Vorteil dieser Ausführung liegt darin, daß der Ausgangsstrom mittels eines externen Stromprogrammierwiderstands frei wählbar ist und die Stromsteuerung durch die Steuerung der Spannung $U_1$ vorgenommen werden kann.

## Ansprüche

1. Geschalteter Stromregler für eine induktive Last (L, $R_L$),
mit einer zwischen die beiden Pole ($V_C$, $V_E$) einer Versorgungsspannungsquelle (B) geschalteten Reihenschaltung mit der induktiven Last (L, $R_L$), einem Stromsensor ($R_S$), dessen Sensorsignal ein Maß für den durch die Induktivitat (L) fließenden Strom ($i_L$) ist, und einem steuerbaren Schalter (S), dessen Schaltzustand von dem Ausgangssignal eines Komparators (K) beeinflußt wird, der das Sensorsignal mit einem den Stromsollwert bestimmenden Referenzsignal einer Referenzsignalquelle (Q, $R_R$) vergleicht und das Umschalten des Schalters (S) jeweils dann bewirkt, wenn das Sensorsignal das Referenzsignal erreicht,
mit einem Freilaufkreis, der eine der induktiven Last parallel geschaltete Freilaufeinrichtung (FL) aufweist, die eine vorbestimmte Freilaufspannung ($U_{FL}$) bildet,
und mit einer Spannungsbegrenzungseinrichtung (Z), die in der Freilaufphase einen raschen Abfall des Freilaufstroms der induktiven Last (L, $R_L$) ermöglicht,
dadurch **gekennzeichnet** ,
daß der Stromsensor ($R_S$) auch Bestandteil des Freilaufkreises ist,

daß die Ausgangsstromkurvenform eine geregelte - schnelle Umschaltung zwischen mehreren Strommittelwerten (I·, I₂) aufweisen kann,

wozu der Referenzsignalwert der Referenzsignalquelle (Q, $R_R$) steuerbar ist,

wobei zur Realisierung der geschalteten Regelung in Abhängigkeit von dem Ausgangssignal des Komparators (K) der Referenzsignalwert ($I_{RL1}$ bzw. $I_{RL2}$) zu einem höheren Referenzpegel ($I_{RH1}$ bzw. $I_{RH2}$) oder der Referenzsignalwert ($I_{RH1}$ bzw $I_{RH2}$) zu einem niedrigeren Referenzpegel ($I_{RL1}$ bzw. $I_{RL2}$) umgeschaltet wird, wobei der Komparator (K) dann, wenn das Sensorsignal den höheren Referenzpegel ($I_{RH1}$ bzw. $I_{RH2}$) erreicht, ein Unterbrechen des zuvor leitenden Schalters (S) bewirkt, und dann, wenn das Sensorsignal den niedri geren Referenzpegel ($I_{RL1}$ bzw. $I_{RL2}$) erreicht, ein Leitendschalten des zuvor unterbrochenen Schalters (S) bewirkt, daß die Spannungsbegrenzungseinrichtung (Z) in Reihenschaltung in den Freilaufkreis geschaltet ist und daß die Spannungsbegrenzungseinrichtung (Z) mittels eines Überbrückungsschalters (KS) überbrückt wird, wenn sich der Ausgangsstrommittelwert (I₁, I₂) nicht ändert, und daß der Überbrückungsschalter (KS) geöffnet wird und somit eine hohe Freilaufspannung erzeugt wird, die einen raschen Stromabfall hervorruft, wenn der Ausgangsstrommittelwert (I₁, I₂) zu einem niedrigeren Wert geregelt wird.

2. Stromregler nach Anspruch 1, dadurch gekennzeichnet, daß die Spannunsbegrenzungseinrichtung eine Zenerdiode (Z) aufweist.

3. Stromregler nach Anspruch 2, dadurch gekennzeichnet, daß die Freilaufeinrichtung ($F_L$) eine Reihenschaltung aus einer Diode (D) und der Zenerdiode (Z) aufweist.

4. Stromregler nach einem der Ansprüche 1 bis 3, dadurch gekennzeichnet, daß der Schalter (S) durch einen Schalttransistor (T) gebildet ist.

5. Stromregler nach einem der vorausgehenden Ansprüche, dadurch gekennzeichnet, daß der Stromsensor ein Sensorwiderstand ($R_S$), die Referenzsignalquelle eine Referenzspannungsquelle (Q, $R_R$) und der Komparator (K) ein Spannungskomparator ist, dessen nichtinvertierender Eingang mit dem zum Schalter (S) weisenden Ende des Sensorwiderstandes ($R_S$) und dessen invertierender Eingang mit der Referenzspannungsquelle (Q, $R_R$) verbunden ist.

6. Stromregler nach einem der vorausgehenden Ansprüche, dadurch gekennzeichnet, daß die Referenzspannungsquelle (Q, $R_R$) eine an den invertierenden Komparatoreingang angeschlossene, in Abhängigkeit von dem Sollwertsteuersignal (bei IM) und von dem Komparatorausgangssignal zwischen mehreren Stromwerten steuerbare Stromquelle (Q) und einen Referenzwiderstand ($R_R$), der zwischen den invertierenden Komparatoreingang und das vom Schalter (S) ferne Ende des Sensorwiderstands ($R_S$) geschaltet ist, aufweist.

7. Stromregler nach einem der vorausgehenden Ansprüche, dadurch gekennzeichnet, daß ein Umschaltsteuereingang (SA2) der Referenzsignalquelle (Q, $R_R$) zum Umschalten zwischen höherem ($I_{RH1}$ bzw. $I_{RH2}$) und niedrigerem ($I_{RL1}$ bzw. $I_{RL2}$) Referenzstromwert direkt an den Komparatorausgang (AK) angeschlossen ist.

8. Stromregler nach Anspruch 6 oder 7, dadurch gekennzeichnet, daß die nicht mit dem Komparator (K) verbundenen Enden von Sensorwiderstand ($R_S$) und Referenzwiderstand ($R_R$) gemeinsam mit einem Ausgangsanschluß (A) des Stromreglers ($S_R$) verbunden sind, daß die induktive Last (L, $R_L$) zwischen den Ausgangsanschluß (A) und einen der beiden Pole (VC, VE) der Versorgungsspannungsquelle (B) geschaltet ist, und daß der Schalter (S) und die Freilaufeinrichtung (FL) zu einer Reihenschaltung gehören, die zwischen die mit den beiden Polen (VC, VE) der Versorgungsspannungsquelle (B) verbindbaren Versorgungsspannungsanschlüsse des Stromreglers ($S_R$) geschaltet ist, wobei ein Verbindungspunkt zwischen dem Schalter (S) und der Freilaufeinrichtung (FL) mit dem nichtinvertierenden Eingang des Komparators (K) verbunden ist.

9. Stromregler nach einem der vorausgehenden Ansprüche, dadurch gekennzeichnet, daß ein UND-Glied (U) vorgesehen ist, das mit einem ersten Eingang an den Komparatorausgang (KA), mit einem zweiten Eingang an eine Reglereinschaltsignalquelle ($U_E$) und mit dem Ausgang an einen Steuereingang des Schalters (S) angeschlossen ist.

10. Stromregler nach Anspruch 9, dadurch gekennzeichnet, daß der Steuereingang des Überbrückungsschalters (KS) mit dem zweiten Eingang des UND-Glieds (U) verbunden ist.

11. Stromregler nach einem der Ansprüche 5 bis 10, dadurch gekennzeichnet, daß zwischen den Sensorwiderstand ($R_S$) und den invertierenden Eingang des Komparators (K) ein Kompensationswiderstand ($R_K$) geschaltet ist, mit dem ein Komparatoreingangsspannungsfehler kompensiert wird, der als Differenz der Spannungsabfälle entsteht, die von den Komparatoreingangsströmen (I +, I-) am Sensorwiderstand ($R_S$) bzw. am Referenzwiderstand ($R_R$) verursacht werden, wenn diese verschiedene Widerstandswerte aufweisen.

12. Stromregler nach einem der Ansprüche 5 bis 11, dadurch gekennzeichnet, daß an den nichtinvertierenden Eingang des Komparators (K) eine Startspannungsquelle ($U_{ST}$) angeschlossen ist, die den nichtinvertierenden Eingang mit einer Startspannung beaufschlagt, die grösser ist als die kritische Spannung der Stromquelle (Q), unterhalb welcher der Ausgangsstrom der Stromquelle von der Stromquellenspannung nicht unabhängig ist.

13. Stromregler nach einem der Ansprüche 5 bis 12, dadurch gekennzeichnet, daß die Stromquelle (Q) einen Stromquellentransistor (T1) aufweit, dessen Steuerelektrode an den Ausgang eines Operationsverstärkers (O) angeschlossen ist, dessen nichtinvertierender Eingang an eine umschaltbare Spannungsquelle (Uₗ) angeschlossen und dessen invertierender Eingang mit dem Emitter des Stromquellentransistors (T1) verbunden ist, und daß an den Verbindungspunkt zwischen Emitter und invertierendem Eingang ein Stromprogrammierwiderstand (Rₗ) angeschlossen ist.

14. Stromregler nach einem der Ansprüche 1 bis 13, dadurch gekennzeichnet, daß er monolithisch integriert ist.

15. Stromregler nach Anspruch 14, dadurch gekennzeichnet, daß der Stromprogrammierwiderstand (Rₗ) ein externer Widerstand ist.

16. Stromregler nach mindestens einem der voraus gehenden Ansprüche, gekennzeichnet durch einen Komparator mit zwei parallel geschalteten Eingangsdifferenzstufen (Q1 bis Q4 bzw. Q5 bis Q8), die von einer gemeinsamen Konstantstromquelle (Q_B) gespeist werden, deren Strom entweder zu beiden oder nur zu der einen oder nur zu der anderen Eingangs-Differenzstufe geleitet wird, je nachdem, ob die Eingangsgleichtaktspannung des Komparators innerhalb, oberhalb oder unterhalb eines Spannungsbereichs liegt, der sich zwischen den Spannungswerten der beiden Pole (V_C, V_E) der Versorgungsspannungsquelle (B) befindet, und mit einer den Ausgängen beider Eingangs-Differenzstufen nachgschalteten, gemeinsamen Stromspiegelschaltung (Q9, Q10), von der das Komparatorausgangssignal abgeleitet wird, wobei mindestens eine (Q1 bis Q4) der beiden Eingangs-Differenzstufen in Basisschaltung arbeitet, wobei diese Eingangs-Differenzstufe (Q1 - Q4) ihren Versorgungsstrom von der Eingangsgleichtaktspannungsquelle bezieht.

0 288 015

FIG. 1

FIG. 2

(a)

(b)

$$I = \frac{U_R}{R_S}$$

(c)

# FIG. 3

# FIG. 4

$$I_H = \frac{U_R}{R_S}$$

FIG. 5

0 288 015

## FIG.6

FIG. 7

# FIG. 8

# FIG.9

## FIG. 10